# EUROPEAN PATENT SPECIFICATION

(11) **EP 4 379 711 B1**
(45) Date of publication and mention of the grant of the patent: **21.10.2026**
(21) Application number: 24171806.3
(22) Date of filing: 24.12.2010
(51) Int. Cl.: G10L 25/78, G10L 15/20

(54) **METHOD AND APPARATUS FOR ADAPTIVELY DETECTING A VOICE ACTIVITY IN AN INPUT AUDIO SIGNAL**
VERFAHREN UND VORRICHTUNG ZUR ADAPTIVEN DETEKTION EINER STIMMAKTIVITÄT IN EINEM AUDIOEINGANGSSIGNAL
PROCÉDÉ ET APPAREIL PERMETTANT DE DÉTECTER DE FAÇON ADAPTATIVE UNE ACTIVITÉ VOCALE DANS UN SIGNAL AUDIO D'ENTRÉE

(43) Date of publication of application: 05.06.2024
(62) Document number(s) of the earlier application(s) in accordance with Art. 76 EPC: 20173782.2 / 3 726 530; 18214325.5 / 3 493 205; 14156678.6 / 2 743 924; 10861147.6 / 2 619 753
(73) Proprietor: Huawei Technologies Co., Ltd., Shenzhen, Guangdong 518129 (CN)
(72) Inventor: Wang, Zhe, Shenzhen, 518129 (CN)
(74) Representative: Thun, Clemens

(56) References cited:
- EP-A1- 2 159 788
- US-A- 5 649 055

## Description

### FIELD OF THE INVENTION

The invention relates to a method and an apparatus for adaptively detecting a voice activity in an input audio signal consisting of frames and in particular to a voice activity detection method and apparatus using non-linearly processed sub-band segmental signal to noise ratio parameters.

### BACKGROUND OF THE INVENTION

Voice activity detection (VAD) is generally a technique which is provided to detect a voice activity in a signal. Voice activity detectors are widely used in the telecommunication industry. The function of a voice activity detector is to detect in communication channels the presence or absence of active signals such as speech or music. The voice activity detector can be provided within a communication network wherein the network can decide to compress a transmission bandwidth in periods where active signals are absent or to perform other processing depending on a voice activity detection decision indicating whether there is an active signal or not. A voice activity detector can compare a feature parameter or a set of feature parameters extracted from the input signal to corresponding threshold values and determine whether the input comprises an active signal or not based on the comparison result. The performance of a voice activity detector is determined to a high degree on the choice of the used feature parameters. There have been many feature parameters proposed for voice activity detection such as energy based parameters, spectral envelope based parameters, entropy based parameters or higher order statistics based parameters. In general, energy based parameters provide a good voice activity detection performance. In recent years sub-band SNR based parameters as a kind of energy based parameters have been widely used in the telecommunication industry. In sub-band SNR based voice activity detectors the SNR for each frequency sub-band of an input frame is detected and the SNRs of all sub-bands are added to provide a segmental SNR. This segmental SNR parameter SSNR can be compared with a threshold value to make a voice activity detection decision VADD. The used threshold is usually a variable which is adaptive to a long term SNR of the input signal or a level of background noise.

In a recently completed ITU-T Recommendation G.720.1 the conventional SSNR parameter has been improved by applying a non-linear processing to get a modified SSNR. The calculated modified segmental SNR is also compared to a threshold which is determined from a threshold table according to the long term SNR of the input signal, the background noise variation and the voice activity detection operating point where the VAD operating point defines the tradeoff of the VAD decision between active and inactive detection, for example a quality -preferred operating point will make the VAD favor the detection of active signals and vice versa.

Although the modified segmental SNR parameter used by G.720.1 does increase the performance of voice activity detection the VAD performance in a non-stationary and low SNR background environment still needs improvement. Conventional voice activity detectors are designed to balance their performances in various background noise conditions. Accordingly, conventional voice activity detectors have a performance which is sub-optimal for specific conditions and in particular in a non-stationary and low SNR background environment.

Accordingly, a goal of the present invention is to provide a method and an apparatus for detecting a voice activity in an input audio signal which have a high VAD performance.

Further, EP 2 159 788 A1 refers to a voice activity detection (VAD) device and method, so that the VAD threshold can be adaptive to the background noise variation. The VAD device includes: a background analyzing unit, adapted to: analyze background noise features of a current signal according to an input VAD judgment result, obtain parameters related to the background noise variation, and output these parameters; a VAD threshold adjusting unit, adapted to: obtain a bias of the VAD threshold according to the parameters output by the background analyzing unit, and output the bias of the VAD threshold; and a VAD judging unit, adapted to: modify a VAD threshold to be modified according to the bias of the VAD threshold output by the VAD threshold adjusting unit, judge the background noise by using the modified VAD threshold, and output a VAD judgment result.

Further, US 5 649 055 A refers to a voice activity detector (VAD), which determines whether received voice signal samples contain speech by deriving parameters measuring short term time domain characteristics of the input signal, including the average signal level and the absolute value of any change in average signal level, and comparing the derived parameter values with corresponding thresholds, which are periodically monitored and updated to reflect changes in the level of background noise, thereby minimizing clipping and false alarms.

### SUMMARY OF THE INVENTION

It is an object of the invention to overcome the shortcomings in the prior art. This object of the invention is solved by the independent claims. Specific embodiments are defined in the dependent claims.

### BRIEF DESCRIPTION OF FIGURES

In the following possible implementations of different aspects of the present invention are described with reference to the enclosed figures in more detail.
Fig. 1 shows a flow chart for illustrating a possible implementation of a method for adaptively detecting a voice activity in an input audio signal according to a first aspect of the present invention;
Fig. 2 shows a block diagram of a VAD apparatus for detecting a voice activity in an input audio signal according to a second aspect of the present invention;
Fig. 3 shows a block diagram of an audio signal processing device according to a third aspect of the present invention.

### DETAILED DESCRIPTION OF EMBODIMENTS

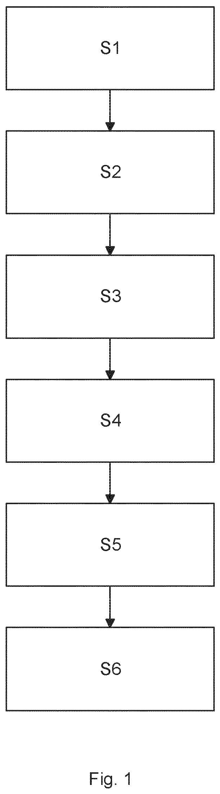

Fig. 1 shows a flow chart of a possible implementation of a method for adaptively detecting a voice activity in an input audio signal according to a first aspect of the present invention. In a first step S1 of the exemplary implementation of the first aspect of the present invention a noise characteristic nc of the input audio signal is determined based at least on a received input frame of the input audio signal. The input audio signal comprises signal frames. In a possible implementation the input signal is segmented into frames of predetermined length of e.g. 20ms and inputted frame by frame. In other implementations the length of the input frames can vary. The noise characteristic nc of the input audio signal determined in step S1 can be a long term SNR lsnr calculated by a long term SNR estimation unit. In another possible implementation the noise characteristic nc determined in step S1 is formed by a background noise variation calculated by a background noise variation estimation unit which calculates a stationarity or fluctuation ε of the background noise bn of the input audio signal. It is also possible that the noise characteristic nc determined in step S1 consists both of a long term SNR lsnr and a background noise variation.

In a further step S2 the received input frame of the input audio signal is divided into several frequency sub-bands.

In a further step S3 a sub-band specific parameter sbsp is calculated based on the sub-band's SNR for each sub-band using an adaptive function AF. In a possible implementation a power spectrum is obtained for each input frame through a fast fourier transformation (FFT) and the obtained power spectrum is divided into a predetermined number of sub-bands with non-linear width. Energies for each sub-band are calculated wherein the energy for each sub-band of the input frame can in a possible implementation be formed by a smoothed energy that is formed by a weighted average of the energies for the same sub-band between the input frame and at least one previous frame. In a possible implementation of the first aspect of the present invention the sub-band SNRs (snr) can be calculated as the modified logarithmic SNRs of the frequency sub-bands: $snr \left(i\right) = {log}_{10} \left(\frac{E \left(i\right)}{{E}_{n} \left(i\right)}\right)$
wherein E(i) is the energy of ith sub-band of the input frame and En(i) is the energy of the ith sub-band of the background noise estimate. The background noise estimate can be calculated by the background noise estimation unit where the energy of each sub-band of the background noise estimate is calculated by moving-averaging the energies of each sub-band among background noise frames detected. This can be expressed as: ${E}_{n} \left(i\right) = λ ⋅ {E}_{n} \left(i\right) + \left(1-λ\right) ⋅ E \left(i\right)$
where E(i) is the energy of the ith sub-band of the frame detected as background noise, λ is a "forgetting factor" usually in a range between 0.9 - 0.99.

After having obtained a SNR (snr) for each sub-band of said input frame in step S3 a sub-band specific parameter (sbsp) is calculated in step S4 based on the respective SNR (snr) of the respective sub-band using an adaptive function (AF). In a possible implementation of the method for adaptively detecting a voice activity in an input audio signal at least one parameter of the adaptive function (AF) is selected dependent of the determined noise characteristic of the input audio signal. The noise characteristic nc determined in step S1 can comprise a long term SNR and/or a background noise variation of the input audio signal. The adaptive function AF is a non-linear function.

In a possible implementation of the method for adaptively detecting a voice activity in an input audio signal according to the first aspect of the present invention in step S5 a modified segmental SNR (mssnr) is derived by adding the sub-band's specific parameters (sbsp) as follows: $mssnr = {\sum }_{i = 0}^{N} sbsp \left(i\right)$
wherein N is the number of frequency sub-bands into which said input frame is divided and
   wherein sbsp(i) is a sub-band specific parameter calculated based on the sub-band's SNR for each sub-band using the adaptive function (AF). In a possible implementation of the first aspect of the present invention the modified segmental SNR (mssnr) is calculated as follows: $mssnr = {\sum }_{i = o}^{N} {\left(f\left(snr\left(i\right)\right)+α\right)}^{β}$
wherein snr(i) is the SNR of the ith sub-band of the input frame,
N is the number of frequency sub-bands into which said input frame is divided and:$AF = \left(f\left(snr\left(i\right)+α\right)β\right.$ being the adaptive function used to calculate the sub-band specific parameter sbsp(i),
wherein α, β are two configurable variables of the adaptive function (AF).

In a possible implementation of the first aspect of the present invention the first variable α of the adaptive function (AF) depends on a long term SNR (lsnr) of the input audio signal as follows: $α = g \left(i, lsnr\right)$
wherein g is a linear or non-linear function and
wherein the second variable β of the adaptive function ((AF)) depends on the long term SNR (lsnr) and a value *φ*: $β = h \left(lsnr, φ\right)$
wherein h is non-linear function and $φ = f \left(snr \left(i\right)\right) + α .$

In a possible implementation of the method according to the first aspect to the present invention the first variable α of the adaptive function (AF) is calculated by: $α = g \left(i, lnsr\right) = a \left(i\right) ⋅ lsnr + b \left(i\right)$
wherein a (i), b (i) are real numbers depending on a sub-band index i and
the second variable β of the adaptive function ((AF)) is calculated by: $β = h \left(lsnr, φ\right) = \left\{\begin{matrix}{β}_{1} & φ \geq d and lsnr > {e}_{2} \\ {β}_{2} & φ \geq d and {e}_{1} < lsnr \leq {e}_{2} \\ {β}_{3} & φ \geq d and lsnr \leq {e}_{1} \\ {β}_{4} & otherwise\end{matrix}\right.$
wherein β1 < β2 < β3 and β4 and d as well as e1 < e2 being integer or floating numbers and wherein lsnr is the long term SNR of the input audio signal.

In a possible specific implementation β1 = 4, β2 = 10, β3 = 15 and β4 = 9. In this specific implementation d is set to 1 and e1 = 8 and e2 = 18.

The modified segmental SNR (msnr) is derived in step S5 by adding the sub-band's specific parameters (sbsp). In a further step S6 of the implementation of the method for adaptively detecting a voice activity in an input audio signal as shown in Fig. 1 the derived modified segmental SNR (mssnr) is compared with a threshold value thr to provide a VAD decision (VADD).

In a possible implementation the derived modified segmental SNR (mssnr) is compared with a threshold value thr which is set to: $thr = \left\{\begin{matrix}{k}_{1} & lsnr > {e}_{2} \\ {k}_{2} & {e}_{1} < lsnr \leq {e}_{2} \\ {k}_{3} & lsnr \leq {e}_{1}\end{matrix}\right.$
wherein k1 > k2 > k3 and e1 < e2 being integer or floating numbers and wherein the VAD decision (VADD) is generated as follows: $VADD = \left\{\begin{matrix}1 & mssnr > thr \\ 0 & mssnr \leq thr\end{matrix}\right.$
wherein VADD = 1 represents an active frame with voice activity being present
and VADD = 0 represents a passive frame with voice activity being absent.

In a possible specific implementation k1 = 135, k2 = 35, k3 = 10 and e1 is set to 8 whereas e2 is set to 18.

In a further possible implementation of the method for adaptively detecting a voice activity in an input audio signal the first variable α of the adaptive function (AF) is calculated by: $α = g \left(i, lsnr, ε\right) = a \left(i\right) ⋅ lsnr + b \left(i\right) + c \left(ε\right)$
wherein a (i), b (i) are real numbers depending on a sub-band index i and
c (ε) is a real number depending on the estimated fluctuation of the background noise bn of the input audio signal and
wherein the second variable β of the adaptive function (AF) is calculated by: $β = h \left(lsnr, φ, ε\right) = \left\{\begin{matrix}{β}_{1} & φ \geq d and lsnr > {e}_{2} and ε \leq p \\ {β}_{2} & φ \geq d and lsnr > {e}_{2} and ε > p \\ {β}_{3} & φ \geq d and {e}_{1} < lsnr < {e}_{2} and ε \leq p \\ {β}_{4} & φ \geq d and {e}_{1} < lsnr < {e}_{2} and ε > p \\ {β}_{5} & φ \geq d and lsnr \leq {e}_{1} and ε \leq p \\ {β}_{6} & φ \geq d and lsnr \leq {e}_{1} and ε > p \\ {β}_{7} & φ < d\end{matrix}\right.$
wherein *φ* = f (snr (i)) + α and ε is the estimated fluctuation of the background noise bn and
d and e1 < e2 and p being integer or floating numbers.

In a specific implementation the parameters are set as follows:
β1 = 3, β2 = 4, β3 = 7, β4 = 10, β5 = 8, β6 = 15, β7 = 15 and
d = 1 and e1 = 8 and e2 = 18 and p = 40.

In an implementation of the method adaptively detecting a voice activity in an input audio signal according to the first aspect of the present invention the derived modified segmental SNR (mssnr) is compared with a threshold value being thr set to: $thr = \left\{\begin{matrix}{q}_{1} + {r}_{1} ⋅ Min \left[\frac{lsnr - {ν}_{1}}{{W}_{1}}, 1\right] lsnr > {e}_{2} \\ {q}_{2} + {r}_{2} Min \left[\frac{lsnr - {ν}_{2}}{{W}_{2}}, 1\right] {e}_{1} < lsnr \leq {e}_{2} \\ {q}_{3} + {r}_{3} ⋅ Max \left[Min\frac{lsnr - {ν}_{3}}{{W}_{3}},1\right] lsnr \leq {e}_{1}\end{matrix}\right.$
wherein q1, q2, q3 and r1, r2, r3 and e1 < e2 and
v1, v2, v3 and w1, w2, w3 being integer or floating numbers.

In a specific implementation of the first aspect of the present invention q1 = 20, q2 = 30, q3 = 9 and r1 = 30, r2 = 10 and r3 = 2. Further, v1 = 18, v2 = 8 and v3 = 5 and w1 = 8, w2 = 10 and w3 = 3. Further, the parameters e1, e2 are set to e1 = 8 and e2 = 18.

Accordingly, in a possible embodiment not only a background noise estimation and a long term SNR estimation is performed but additionally also a background noise variation estimation is performed to determine a background noise fluctuation ε of the background noise of the input audio signal.

Two factors, α, β of the adaptive function (AF) adjust a trade-off of the discriminating power of the modified segmental SNR parameter. Different trade-offs significate that the detection is more favourable for either active or inactive detection for the received frames. Generally the higher the long term SNR (lsnr) of the input audio signal is the more favourable it is to adjust the modified segmental SNR (mssnr) for active detection by means of adjusting the corresponding coefficients α, β of the adaptive function (AF).

The VAD decision performed in step S6 can further go through a hard hang-over procedure. A hard hang-over procedure forces the VAD decisions for several frames to be active immediately after the VAD decision obtained in step S6 changes from active to inactive.

In a possible implementation of the method for adaptively detecting a voice activity in an input audio signal according to the first aspect of the present invention the background noise of the input audio signal is analyzed and a number representing the extent of stationarity or fluctuation of the background noise, denoted by ε, is generated. This fluctuation ε of the background noise bn can be calculated for example by: $ε = ω ⋅ ε + \left(1-ω\right) ⋅ {ssnr}_{n}$ wherein ω is a forgetting factor usually between 0.9 - 0.99 and ssnrn is the summation of snr(i) over all sub-bands of the frame detected as a background frame multiplied by a factor of e.g. 10.

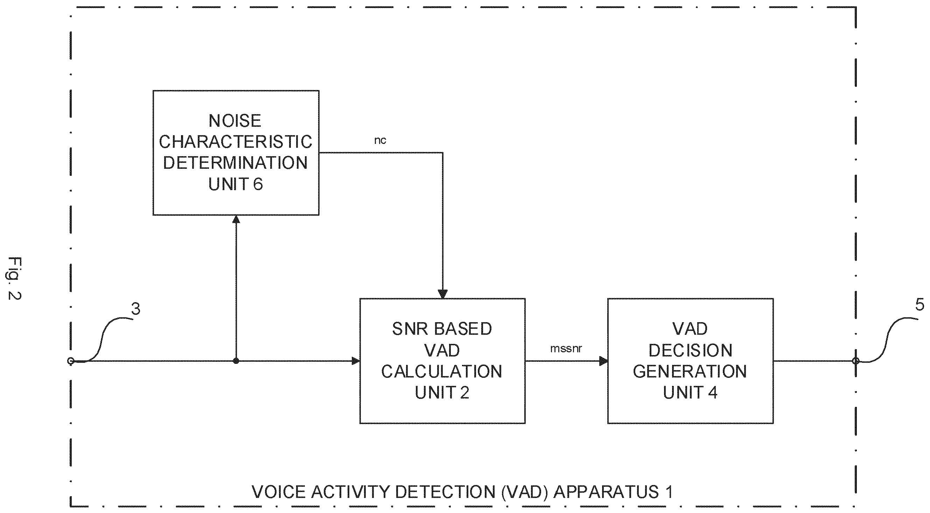

Fig. 2 shows a block diagram of a VAD apparatus 1 according to a second aspect of the present invention. The VAD apparatus 1 comprises a SNR based VAD parameter calculation unit 2 receiving an input audio signal applied to an input 3 of the VAD apparatus 1. The SNR based VAD parameter calculation unit 2 calculates a SNR to each sub-band of an applied input frame of the input audio signal and a sub-band's specific parameter (sbsp) based on said respective sub-band SNR (snr) for each sub-band using an adaptive function (AF) and derives a modified segmental SNR (mssnr) by adding the sub-band's specific parameters (sbsp). The derived modified segmental SNR (mssnr) is applied by the SNR based VAD parameter calculation unit 2 to a VAD decision generation unit 4 of the VAD apparatus 1. The VAD decision generation unit 4 generates a VAD decision (VADD) by comparing the modified segmental SNR (mssnr) with a threshold value (thr). The generated VAD decision (VADD) is output by the VAD apparatus 1 at an output 5.

In a possible implementation of the VAD apparatus 1 according to the second aspect of the present invention the VAD detection apparatus 1 further comprises a noise characteristic determination unit 6 as shown in fig. 2. The noise characteristic determination unit 6 determines a noise characteristic (nc) of the input signal based at least on a received input frame of the input audio signal applied to input 3 of the VAD apparatus 1. In an alternative implementation the noise characteristic (nc) is applied to the SNR based VAD parameter calculation unit 2 from an external noise characteristic determination entity. In a possible implementation of the VAD apparatus 1 according to the second aspect of the present invention the noise characteristic determination unit 6 as shown in fig. 2 can comprise a long term SNR estimation unit which calculates a long term SNR (lsnr) of the input audio signal. In a further possible implementation the noise characteristic determination unit 6 can also comprise a background noise variation estimation unit which calculates a stationarity or fluctuation ε of the background noise bn of the input audio signal. Accordingly, the noise characteristic (nc) provided by the noise characteristic determination unit 6 can comprise a long term SNR (lsnr) of the input audio signal and/or a stationarity or fluctuation (ε) of the background noise of the input audio signal. In a possible implementation an adaptive function (AF) used by the SNR based VAD parameter calculation unit 2 is selected dependent on at least one noise characteristic nc determined by said noise characteristic determination unit 6.

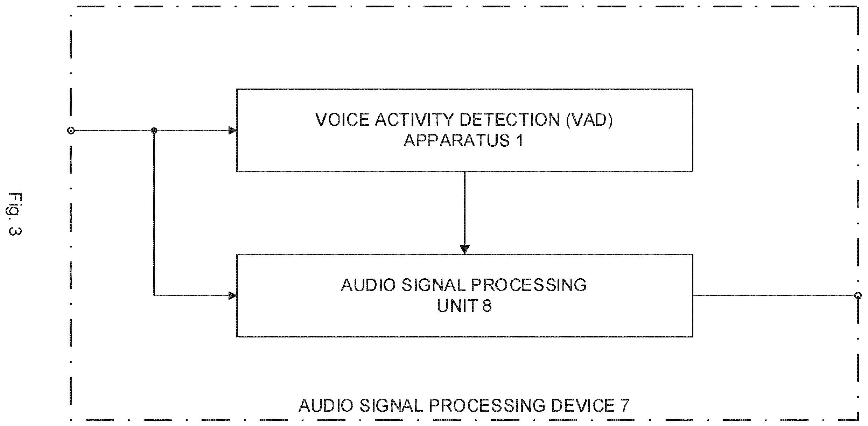

Fig. 3 shows a block diagram of an audio signal processing device 7 according to a third aspect of the present invention comprising VAD apparatus 1 providing a VAD decision (VADD) for an audio signal processing unit 8 within the audio signal processing device 7. The audio signal processing of an input audio signal is performed by the audio signal processing unit 8 depending on the received VAD decision (VADD) generated by the VAD apparatus 1 according to the first aspect of the present invention. The audio signal processing unit 8 can perform for example an encoding of the input audio signal based on the VAD decision (VADD). The audio signal processing device 7 can form part of a speech communication device such as a mobile phone. Further, the audio signal processing device 7 can be provided within a speech communication system such as an audio conferencing system, an echo signal cancellation system, a speech noise reduction system, a speech recognition system or a speech encoding system. The VAD decision (VADD) generated by the VAD apparatus 1 can control in a possible implementation a discontinuous transmission DTX mode of an entity, for example an entity in an cellular radio system, for example a GSM or LTE or CDMA system. The VAD apparatus 1 can enhance the system capacity of a system such as a cellular radio system by reducing co-channel interferences. Furthermore, the power consumption of a portable digital device within a cellular radio system can be reduced significantly.

## Claims

1. A method for adaptively detecting a voice activity in an input audio signal consisting of frames, wherein the method is performed by a voice activity detection apparatus, and the method comprises the steps of:
• determining (S1) a long term signal to noise ratio, lsnr, of the input audio signal based at least on a received input frame of the input audio signal,
• dividing (S2) the received input frame of the audio signal into several sub-bands;
• obtaining (S3) a signal to noise ratio, snr, for each sub-band of the input frame;
• calculating (S4) a sub-band specific parameter, sbsp, based on said respective sub-band's signal to noise ratio, snr, for each sub-band using an adaptive function, AF, wherein the sbsp of the i^{th} sub-band *sbsp(i)* is calculated as follows: $sbsp \left(i\right) = {\left(f\left(snr\left(i\right)\right)+α\right)}^{β}$ where i is a sub-band index of the i^{th} sub-band, snr(i) is a signal to noise ratio of the i^{th} sub-band, *(f(snr(i))+α)^{β}* is the adaptive function, and α and β are configurable variables of the adaptive function;
• deriving (S5) a modified segmental signal to noise ratio, mssnr, by adding the calculated sub-band specific parameters, sbsp, of each sub-band, wherein the mssnr is calculated as follows: $mssnr = {\sum }_{i = 1}^{N} sbsp \left(i\right)$ where N is the number of frequency sub-bands into which said input frame is divided;
• comparing (S6) the mssnr with a threshold value, thr, to provide a voice activity detection decision, VADD; and
• encoding the audio signal based on the VADD.

2. The method according to claim 1, wherein α is determined based on the sub-band index i and the Isnr of the audio signal according to the formula: $α = g \left(i, lsnr\right) ,$
where *g(i, lsnr)* is a linear or non-linear function, and
wherein the second variable β depends on the Isnr and *φ*: $β = h \left(lsnr, φ\right)$
wherein h is non-linear function and $φ = f \left(snr \left(i\right)\right) + α .$

3. The method according to claim 2, wherein $α = g \left(i, lnsr\right) = a \left(i\right) \times lsnr + b \left(i\right) ,$ wherein *a(i)* and *b(i)* are values depending on the sub-band index i.

4. The method according to one of the preceding claims 1 to 3,wherein said signal to noise ratio, snr, for each sub-band of said input frame is obtained by:
∘ obtaining a signal energy for each sub-band,
∘ estimating a background noise energy, bn, for each sub-band, and
∘ calculating the signal to noise ratio, snr, for each sub-band depending on the signal energy and the background noise energy of the respective sub-band.

5. The method according to claim 4, wherein the signal energy for each sub-band of said input frame is a smoothed signal energy forming a weighted average between the input frame and at least one previous frame.

6. A voice activity detection apparatus configured to perform the method according to any of claims 1 to 5.

## Patentansprüche

1. Verfahren zum adaptiven Detektieren einer Sprachaktivität in einem Eingangsaudiosignal, das aus Frames besteht, wobei das Verfahren durch eine Sprachaktivitätsdetektionseinrichtung durchgeführt wird und das Verfahren die folgenden Schritte umfasst:
• Bestimmen (S1) eines Langzeit-Signal-Rausch-Verhältnisses, lsnr, des Eingangsaudiosignals basierend mindestens auf einem empfangenen Eingangsframe des Eingangsaudiosignals,
• Teilen (S2) des empfangenen Eingangsframes des Audiosignals in mehrere Subbänder;
• Erhalten (S3) eines Signal-Rausch-Verhältnisses, snr, für jedes Subband des Eingangsframes;
• Berechnen (S4) eines subbandspezifischen Parameters, sbsp, basierend auf dem Signal-Rausch-Verhältnis, snr, des jeweiligen Subbands für jedes Subband unter Verwendung einer adaptiven Funktion, AF, wobei der sbsp des i-ten Subbands sbsp(i) wie folgt berechnet wird: $sbsp \left(i\right) = {\left(f\left(snr\left(i\right)\right)+α\right)}^{β}$ wobei i ein Subbandindex des i-ten Subbands ist, snr(i) ein Signal-Rausch-Verhältnis des i-ten Subbands ist, (f(snr(i)) + α)^{β} die adaptive Funktion ist und α und β konfigurierbare Variablen der adaptiven Funktion sind;
• Ableiten (S5) eines modifizierten segmentalen Signal-Rausch-Verhältnisses, mssnr, durch Addieren der berechneten subbandspezifischen Parameter, sbsp, jedes Subbands, wobei das mssnr wie folgt berechnet wird: $mssnr = {\sum }_{i = 1}^{N} sbsp \left(i\right)$ wobei N die Anzahl von Frequenzsubbändern ist, in die der Eingangsframe geteilt wird;
• Vergleichen (S6) des mssnr mit einem Schwellenwert, thr, um eine Sprachaktivitätsdetektionsentscheidung, VADD, bereitzustellen; und
• Codieren des Audiosignals basierend auf der VADD.

2. Verfahren nach Anspruch 1, wobei α basierend auf dem Subbandindex i und dem lsnr des Audiosignals gemäß der folgenden Formel bestimmt wird: $α = g \left(i, lsnr\right) ,$
wobei g(i, lsnr) eine lineare oder nichtlineare Funktion ist und
wobei die zweite Variable β von dem lsnr und φ abhängt: $β = h \left(lsnr, φ\right)$
wobei h eine nichtlineare Funktion ist und $φ = f \left(snr \left(i\right)\right) + α .$

3. Verfahren nach Anspruch 2, wobei $α = g \left(i, lnsr\right) = a \left(i\right) \times lsnr + b \left(i\right) ,$ wobei a(i) und b(i) Werte sind, die von dem Subbandindex i abhängen.

4. Verfahren nach einem der vorhergehenden Ansprüche 1 bis 3, wobei das Signal-Rausch-Verhältnis, snr, für jedes Subband des Eingangsframes erhalten wird durch:
∘ Erhalten einer Signalenergie für jedes Subband,
∘ Schätzen einer Hintergrundrauschenergie, bn, für jedes Subband und
∘ Berechnen des Signal-Rausch-Verhältnisses, snr, für jedes Subband in Abhängigkeit von der Signalenergie und der Hintergrundrauschenergie des jeweiligen Subbands.

5. Verfahren nach Anspruch 4, wobei die Signalenergie für jedes Subband des Eingangsframes eine geglättete Signalenergie ist, die einen gewichteten Mittelwert zwischen dem Eingangsframe und mindestens einem vorherigen Frame bildet.

6. Sprachaktivitätsdetektionseinrichtung, die dazu ausgelegt ist, das Verfahren nach einem der Ansprüche 1 bis 5 durchzuführen.

## Revendications

1. Procédé de détection adaptative d'une activité vocale dans un signal audio d'entrée constitué de trames, le procédé étant réalisé par un appareil de détection d'activité vocale, et le procédé comprend les étapes suivantes :
• détermination (S1) d'un rapport signal sur bruit à long terme, lsnr, du signal audio d'entrée sur la base au moins d'une trame d'entrée reçue du signal audio d'entrée,
• division (S2) de la trame d'entrée reçue du signal audio en plusieurs sous-bandes ;
• obtention (S3) d'un rapport signal sur bruit, snr, pour chaque sous-bande de la trame d'entrée ;
• calcul (S4) d'un paramètre spécifique à une sous-bande, sbsp, sur la base dudit rapport signal sur bruit, snr, de la sous-bande respective pour chaque sous-bande au moyen d'une fonction adaptative, AF, le sbsp de la i-ème sous-bande sbsp(i) étant calculé comme suit : $sbsp \left(i\right) = {\left(f\left(snr\left(i\right)\right)+α\right)}^{β}$ où i désigne un indice de sous-bande de la i-ème sous-bande, snr(i) désigne un rapport signal sur bruit de la i-ème sous-bande, (f(snr(i))+ α)^{β} désigne la fonction adaptative, et α et β désignent des variables configurables de la fonction adaptative ;
• dérivation (S5) d'un rapport signal sur bruit segmentaire modifié, mssnr, par addition des paramètres spécifiques à une sous-bande, sbsp, calculés de chaque sous-bande, le mssnr étant calculé comme suit : $mssnr = {\sum }_{i = 1}^{N} sbsp \left(i\right)$ où N désigne le nombre de sous-bandes de fréquences en lesquelles ladite trame d'entrée est divisée ;
• comparaison (S6) du mssnr avec une valeur de seuil, thr, afin de fournir une décision de détection d'activité vocale, VADD ; et
• codage du signal audio sur la base de la VADD.

2. Procédé selon la revendication 1, dans lequel α est déterminé sur la base de l'indice i de sous-bande et du lsnr du signal audio selon la formule : $α = g \left(i, lsnr\right) ,$
où g(i, lsnr) désigne une fonction linéaire ou non linéaire, et
dans lequel la deuxième variable β dépend du lsnr et de φ : $β = h \left(lsnr, φ\right)$
où h désigne une fonction non linéaire et $φ = f \left(snr \left(i\right)\right) + α .$

3. Procédé selon la revendication 2, dans lequel $α = g \left(i, lnsr\right) = a \left(i\right) \times lsnr + b \left(i\right) ,$ où a(i) et b(i) désignent des valeurs dépendant de l'indice i de sous-bande.

4. Procédé selon l'une des revendications 1 à 3 précédentes, dans lequel ledit rapport signal sur bruit, snr, pour chaque sous-bande de ladite trame d'entrée est obtenu par :
∘ obtention d'une énergie de signal pour chaque sous-bande,
∘ estimation d'une énergie de bruit de fond, bn, pour chaque sous-bande, et
∘ calcul du rapport signal sur bruit, snr, pour chaque sous-bande en fonction de l'énergie de signal et de l'énergie de bruit de fond de la sous-bande respective.

5. Procédé selon la revendication 4, dans lequel l'énergie de signal pour chaque sous-bande de ladite trame d'entrée est une énergie de signal lissée formant une moyenne pondérée entre la trame d'entrée et au moins une trame précédente.

6. Appareil de détection d'activité vocale configuré pour réaliser le procédé selon l'une quelconque des revendications 1 à 5.
